# EUROPEAN PATENT SPECIFICATION

(11) **EP 3 961 081 B1**
(45) Date of publication and mention of the grant of the patent: **13.08.2025**
(21) Application number: 20193741.4
(22) Date of filing: 31.08.2020
(51) Int. Cl.: F16M 11/04, F16M 13/02, G03B 21/00

(54) **CEILING MOUNT**
DECKENHALTERUNG
MONTAGE AU PLAFOND

(43) Date of publication of application: 02.03.2022
(73) Proprietor: Active Cues B.V., 3512 NS Utrecht (NL)
(72) Inventor: Tenwolde, Daan, 3512 NS UTRECHT (NL); Veerman, Elske, 3512 NS UTRECHT (NL); Konings, Mathijs, 3512 NS UTRECHT (NL)
(74) Representative: De Vries & Metman

(56) References cited:
- EP-A1- 2 940 322
- CN-A- 108 150 770
- CN-A- 109 300 274
- CN-A- 110 805 812
- CN-U- 208 271 406
- KR-A- 20150 103 396
- KR-Y1- 200 490 442
- US-A1- 2006 249 641

## Description

The invention relates to a ceiling mount, in particular for a pendant device, such as a projector.

Projectors displaying interactive images on horizontal surfaces, such as a floor or a table, can for example be used with therapeutic treatment of people suffering from dementia or intellectual disability. An example of such a system is the Tovertafel^{™} of Active Cues, the Netherlands. Such projectors are usually mounted to a ceiling enabling downward projection.

US 2006/249641 discloses a ceiling mounted transfer device for transporting and supporting a medical apparatus, e.g., in a hospital. CN 110805812A discloses a ceiling mount for a projector using a clamping mechanism. EP2940322A1 shows the preamble of claim 1.

It is an object of the invention to provide a simple ceiling mount for such projectors or similar pendant structures, allowing easy but safe positioning and removal of the projector.

The object of the invention is achieved with a ceiling mount according to claim 1. This makes it possible to simply hook on a projector provided with a matching element, such as a handle. For downward directed projectors, there is no need to fixate the projector into a desired orientation and the projector can simply hang down from the hook.

The rod is a tube with an interior forming a cable guide or cable passage. The power cable and/or possible further cables can be guided via the tube interior and be hidden from view. The tubular rod can for example comprise a cable outlet at a distance from a rear side of the hook, guiding the cable away from the hook.

The hook is formed as a cutout in the linking end of the rod, avoiding the need for a separate hook part.

In a specific embodiment, the hook comprises a lock lever moveable between a locking position where it locks a matching coupling element of the pendant device, and a release position. Such a lock lever may for example comprise a biasing element, such as a torsional spring, biasing the lock lever towards the locking position.

The lock lever can for example be provided with a short arm blocking access to a handle receiving area of the hook in the locking position, and being at a distance from the handle receiving area during rotation between the locking position and the release position. The handle of a projector can be inserted into the handle receiving area by pushing the short arm backwards against the action of the biasing element. When the handle is in the handle receiving area of the hook, the handle is out of reach of the short arm of the lock lever, and the short arm flips back into the locking position under the action of the biasing element. To release the handle, the short arm can be pushed back to the release position, and the handle can be lifted and moved from the handle receiving are of the hook. To push the short arm towards the release position, the lock lever can be provided with a long arm projecting from the hook, when the lock lever is in the locking position.

In a specific embodiment, the mounting base can comprise a mounting plate with a central bracket, e.g., a pair of flanges, holding the upper end of the rod, surrounded by an array of magnetic arms for holding a cover of the base. The cover can for example be cylindrical or box-shaped, fully hiding the base from view at all sides.

The invention also pertains to an assembly or combination of a ceiling mount and a pendant device, such as a projector, with a handle,
the ceiling mount comprising a hook, shaped to define a handle receiving area for receiving and suspending said handle,
the hook comprising a lock lever moveable, e.g., rotatable, between a locking position and a release position, and a biasing element, such as a torsional spring, biasing the lock lever towards the locking position, and
wherein the lock lever has a short arm blocking access to the handle receiving area of the hook in the locking position, the short arm being at a distance from the handle during rotation of the lock lever between the locking position and the release position, when the handle is in the handle receiving area.

The invention will be further explained with reference to the accompanying drawings.
Figure 1: shows a first embodiment of the ceiling mount of the present invention;
Figure 2: shows the ceiling mount of Figure 1 extended with an additional tube rod;
Figure 3: shows the ceiling mount of Figure 1 in more detail;
Figure 4: shows the ceiling mount of Figure 3 with transparent parts;
Figure 5: shows the ceiling mount of Figure 1 with a power cable;
Figure 6: shows an assembly of a ceiling mount and a projector before suspension;
Figure 7: shows the assembly of Figure 6 after suspension.

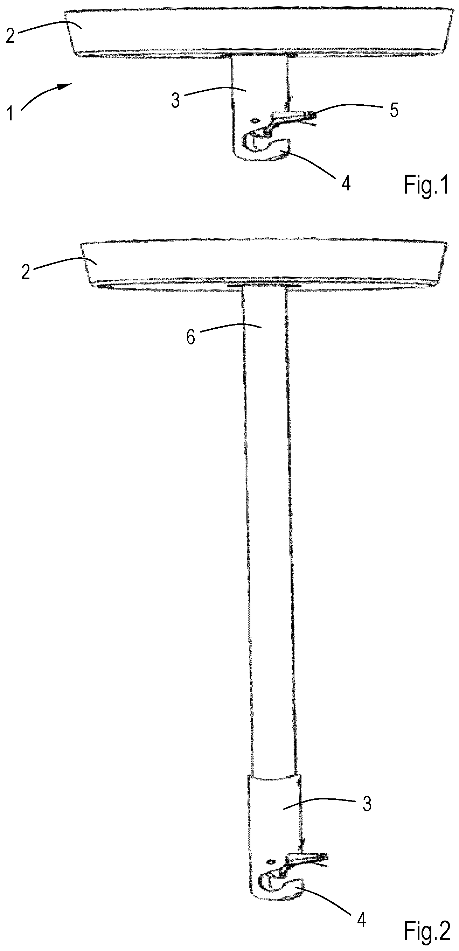

Figure 1 shows a ceiling mount 1 according to the invention, designed for holding a pendant projector displaying interactive images on a tabletop or similar horizontal surface.

The ceiling mount 1 comprises a mounting base 2 for attachment to a ceiling and a rod 3 with a ceiling end connectable to the mounting base 2 and an opposite linking end comprising a hook 4 with a lock lever 5.

Figure 2 shows the same ceiling mount 1, but with an extension rod 6 between the hooked rod 3 and the mounting base 2. This configuration can for example be used with high ceilings.

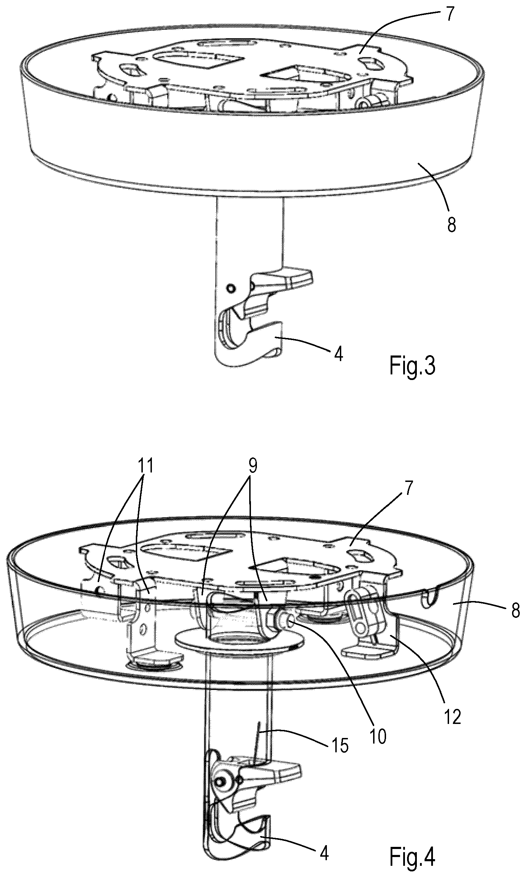

The ceiling mount 1 is shown in more detail in Figure 3, showing the interior of the mounting base 2. The mounting base 2 comprises a mounting plate 7 to be fastened to a ceiling, and a magnetic cover 8 hiding the mounting plate 7 from view. Figure 4 shows the same view, but with the cover 8 and the rod 3 being transparent to show the interior structures.

The mounting plate 7 is a steel sheet with a central pair of downwardly bent parallel flanges 9 forming a bracket for mounting the ceiling end of the rod 3 by means of a bolt 10. At its circumference the mounting plate comprises an array of downwardly bent arms 11 with magnetic tips 12 bent to be substantially horizontal, when mounted. These magnetic tips 12 hold the magnetic cover 8 in place.

The rod 3 is a hollow tube with a linking end received within the cover and linked to the bracket 9 of the mounting plate 7. The opposite end has a cutout forming the hook 4. The hook 4 is shaped and dimensioned to define a handle receiving area 4A for receiving a matching handle or similar coupling element of a projector or similar pendant device to be suspended from the ceiling mount 1. The hook has an upward pointing end 4B at an access side of the handle receiving area 4B.

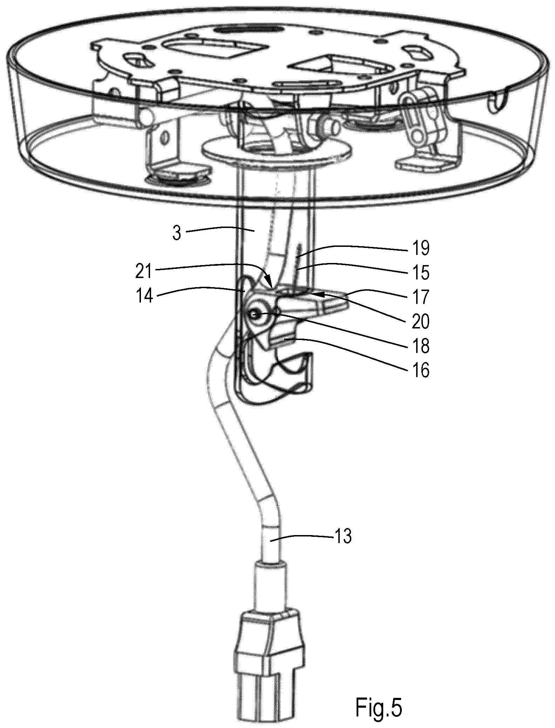

The interior of the tubular rod 3 forms a cable guide or cable passage 3A for the power cable 13 of the pendant projector, as shown in Figure 5. The power cable 13 enters the open top end of the tubular rod 3 and leaves the tubular rod 3 at a cable outlet 14 at a rear side of the hook 4.

The hook 4 is provided with the lock lever 5, which is moveable between a locking position, where it locks a matching coupling element of the pendant device, and a release position. In the Figures, the lock lever 5 is shown in the locking position.

The lock lever 5 has a short arm 16 and a long arm 17 substantially under right angles with each other. Where the two arms 16, 17 connect, the lock lever 5 has an axis 18 connected to the inner walls of the tubular rod 3. The lock lever 5 is tiltable about this axis 18. A torsion spring 15 surrounds the axis 18 and has one end connected to the axis 18, while the other end 19 projects from a recess 20 in the long arm 17 and connects to the interior wall of the tubular rod 3. Pushing down the long arm 17 will tension the torsion spring 15 and bias the lock lever 5 back into the locking position. In the locking position, the short arm 16 points downward and blocks access to the handle receiving area of the hook 4.

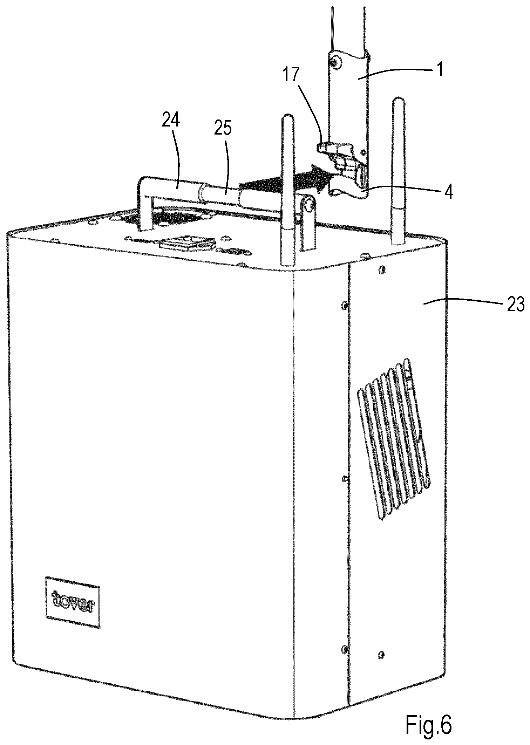

Figure 6 shows a combination of a projector 23 and the ceiling mount 1 of Figures 1 - 5. The projector 23 has a top side with a handle 24. The handle 24 can be used for lifting and carrying the projector 23 and also for suspending the projector 23 from the hook 4 of the ceiling mount 1. In the shown exemplary embodiment, the handle 24 has a central recessed portion 25 of a reduced diameter matching the diameter of the handle receiving area 4A of the hook 4.

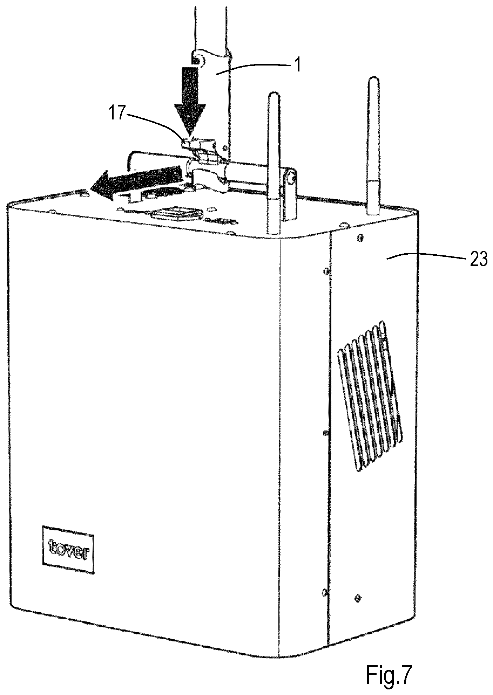

When the projector 23 is suspended from the hook 4, the user, holding a handle 24 of the projector 23 with both hands, can position the handle 24 against the short arm 16 of the lock lever 5, and push down the long arm 17 of the lock lever 5, e.g., with his thumb, to open the hook 4. The handle 24 can then be lifter over the upward projecting point 4B of the hook 4 into the handle receiving area 4A of the hook 4 and be lowered to rest on the bottom of the hook 4. The short arm 16 of the lock lever 5 is dimensioned in such a way that it can flip back over the handle when the handle is in this lower position in the hook 4 under the biasing action of the torsional spring 15. In this position, shown in Figure 7, the short arm 16 of the lock lever 5 locks the handle 24 of the projector 23 within the hook 4. The power cable can be connected to the projector 23 and the projector can be used. In the shown exemplary embodiment, the projector projects downward form its lower side, e.g., onto a table top or floor.

The handle 24 of the projector 23 can be released by pushing down the long arm 17 of the lock lever 5 against the action of the torsion spring 15 and by subsequently lifting the handle out of the hook 4.

The short arm 16 of the lock lever 5 moves completely within the interior of the tubular rod 3 at the level of the cable outlet passage 14. Here, the short arm 16 engages the power cable 13. The short arm 16 has a recess 21 guiding the power cable 13.

## Claims

1. Ceiling mount (1) for a pendant device, the ceiling mount comprising a mounting base (2) for attachment to a ceiling, and a rod (3) with a ceiling end connectable to the mounting base and an opposite linking end wherein the linking end of the rod comprises a hook (4) for holding in use said pendant device, formed as a cutout in the linking end of the rod (3), **characterized in that** the rod (3) is a tube with an interior (3A) forming a cable passage.

2. Ceiling mount (1) according to claim 1, wherein the tubular rod (3) comprises a cable outlet (14) at a distance from a rear side of the hook (4).

3. Ceiling mount (1) according to any preceding claim, wherein the hook (4) comprises a lock lever (5) moveable between a locking position where it locks a matching coupling element of the pendant device, and a release position.

4. Ceiling mount (1) according to claim 3, wherein the lock lever (5) comprises a biasing element (15), such as a torsional spring, biasing the lock lever (5) towards the locking position.

5. Ceiling mount (1) according to claim 4, wherein the lock lever (5) has a short arm (16) blocking access to a handle receiving area (4A) of the hook in the locking position, and at a distance from the handle receiving area during rotation between the locking position and the release position.

6. Ceiling mount (1) according to claim 5, wherein the lock lever (5) has a long arm (17) projecting from the hook in the locking position.

7. Ceiling mount (1) according to any one of the preceding claims, wherein the mounting base (2) comprises a mounting plate (7) with a central bracket, e.g., a pair of flanges (9), holding the upper end of the rod (3).

8. Ceiling mount (1) according to claim 7, wherein the mounting plate (7) comprises an array of magnetic arms (11) for holding a magnetic cover (8) of the base.

9. Assembly of a ceiling mount (1) according to any one of the preceding claims and a pendant device, such as a projector (23), with a handle (24),
wherein the hook (4) is shaped to define a handle receiving area (4A) for receiving and suspending said handle.

## Patentansprüche

1. Deckenhalterung (1) für eine hängende Vorrichtung, wobei die Deckenhalterung eine Montagebasis (2) zur Anbringung an einer Decke und einen Stab (3) mit einem Deckenende, welches mit der Basis verbindbar ist, und einem gegenüberliegenden Verbindungsende aufweist, wobei das Verbindungsende des Stabes einen Haken (4) zum Halten der hängenden Vorrichtung im Gebrauch aufweist, welcher als eine Aussparung in dem Verbindungsende des Stabes (3) ausgebildet ist, **dadurch gekennzeichnet, dass** der Stab (3) ein Rohr mit einem Innenraum (3A), welcher einen Kabeldurchgang bildet, ist.

2. Deckenhalterung (1) nach Anspruch 1, wobei der rohrförmige Stab (3) einen Kabelauslass (14) in einem Abstand von einer hinteren Seite des Hakens (4) aufweist.

3. Deckenhalterung (1) nach einem der vorhergehenden Ansprüche, wobei der Haken (4) einen Verriegelungshebel (5) aufweist, welcher zwischen einer Verriegelungsposition, in welcher er ein passendes Kupplungselement der Hängevorrichtung verriegelt, und einer Freigabeposition bewegbar ist.

4. Deckenhalterung (1) nach Anspruch 3, wobei der Verriegelungshebel (5) ein Vorspannelement (15), wie beispielsweise eine Torsionsfeder, aufweist, welches den Verriegelungshebel (5) in Richtung zur Verriegelungsposition vorspannt.

5. Deckenhalterung (1) nach Anspruch 4, wobei der Verriegelungshebel (5) einen kurzen Arm (16) aufweist, welcher den Zugang zu einem Griffaufnahmebereich (4A) des Hakens in der Verriegelungsposition blockiert und sich während der Drehung zwischen der Verriegelungsposition und der Freigabeposition von dem Griffaufnahmebereich im Abstand ist.

6. Deckenhalterung (1) nach Anspruch 5, wobei der Verriegelungshebel (5) einen langen Arm (17) aufweist, welcher in der Verriegelungsposition von dem Haken vorsteht.

7. Deckenhalterung (1) nach einem der vorhergehenden Ansprüche, wobei die Montagebasis (2) eine Montageplatte (7) mit einem zentralen Halter, z.B. einem Paar an Flanschen (9), aufweist, welcher das obere Ende des Stabes (3) hält.

8. Deckenhalterung (1) nach Anspruch 7, wobei die Montageplatte (7) eine Anordnung von Magnetarmen (11) zum Halten einer magnetischen Abdeckung (8) der Basis aufweist.

9. Anordnung aus einer Deckenhalterung (1) nach einem der vorhergehenden Ansprüche und einer hängenden Vorrichtung, wie z.B. einem Projektor (23), mit einem Griff (24),
wobei der Haken (4) so geformt ist, dass er einen Griffaufnahmebereich (4A) zur Aufnahme und Aufhängung des Griffs definiert.

## Revendications

1. Montage au plafond (1) pour un dispositif suspendu, le montage au plafond comprenant une base de montage (2) pour fixation à un plafond, et une tige (3) avec une extrémité pour plafond pouvant être raccordée à la base de montage et une extrémité de liaison opposée, dans lequel l'extrémité de liaison de la tige comprend un crochet (4) pour soutenir en utilisation ledit dispositif suspendu, formé comme une découpe dans l'extrémité de liaison de la tige (3), **caractérisé en ce que** la tige (3) est un tube avec un intérieur (3A) formant un passage de câble.

2. Montage au plafond (1) selon la revendication 1, dans lequel la tige tubulaire (3) comprend une sortie de câble (14) à une distance d'un côté arrière du crochet (4).

3. Montage au plafond (1) selon l'une quelconque des revendications précédentes, dans lequel le crochet (4) comprend un levier de verrouillage (5) mobile entre une position de verrouillage, où il verrouille un élément de couplage correspondant du dispositif suspendu, et une position de libération.

4. Montage au plafond (1) selon la revendication 3, dans lequel le levier de verrouillage (5) comprend un élément de sollicitation (15), tel qu'un ressort de torsion, sollicitant le levier de verrouillage (5) vers la position de verrouillage.

5. Montage au plafond (1) selon la revendication 4, dans lequel le levier de verrouillage (5) présente un bras court (16) bloquant l'accès à une zone de réception de poignée (4A) du crochet dans la position de verrouillage, et à une distance de la zone de réception de poignée pendant la rotation entre la position de verrouillage et la position de libération.

6. Montage au plafond (1) selon la revendication 5, dans lequel le levier de verrouillage (5) présente un bras long (17) faisant saillie depuis le crochet dans la position de verrouillage.

7. Montage au plafond (1) selon l'une quelconque des revendications précédentes, dans lequel la base de montage (2) comprend une plaque de montage (7) avec un support central, par exemple une paire de brides (9), soutenant l'extrémité supérieure de la tige (3).

8. Montage au plafond (1) selon la revendication 7, dans lequel la plaque de montage (7) comprend un réseau de bras magnétiques (11) pour soutenir un couvercle magnétique (8) de la base.

9. Ensemble constitué d'un montage au plafond (1) selon l'une quelconque des revendications précédentes et d'un dispositif suspendu, tel qu'un projecteur (23), avec une poignée (24),
dans lequel le crochet (4) est formé pour définir une zone de réception de poignée (4A) pour recevoir et suspendre ladite poignée.
